# EUROPEAN PATENT SPECIFICATION

(11) **EP 4 030 749 B1**
(45) Date of publication and mention of the grant of the patent: **17.01.2024**
(21) Application number: 21212391.3
(22) Date of filing: 25.10.2016
(51) Int. Cl.: H04N 23/61, H04N 23/63

(54) **IMAGE PHOTOGRAPHING METHOD AND APPARATUS**
VERFAHREN UND VORRICHTUNG ZUR BILDFOTOGRAFIE
APPAREIL ET PROCÉDÉ DE PHOTOGRAPHIE D'IMAGE

(43) Date of publication of application: 20.07.2022
(62) Divisional of application: 16920066.4
(73) Proprietor: Huawei Technologies Co., Ltd., Shenzhen, Guangdong 518129 (CN)
(72) Inventor: LU, Peng, Guangdong, 518129 (CN)
(74) Representative: Pfenning, Meinig & Partner mbB

(56) References cited:
- EP-A2- 2 076 022
- WO-A1-2011/121917
- US-A1- 2010 066 847
- US-A1- 2015 103 149
- US-A1- 2016 127 651

## Description

### TECHNICAL FIELD

The present invention relates to the image capture field, and in particular, to an image photographing method and apparatus.

### BACKGROUND

Currently, intelligent terminals such as smartphones and tablet computers that have a camera function are increasingly popularized. Photographing functions of the intelligent terminals are increasingly improved, and various algorithms are used to make a photograph vivider and more remarkable.

An existing image photographing method used by an intelligent terminal is mainly as follows: A user enables a photographing function of the intelligent terminal, and selects a region on a preview screen presented in a display interface of the intelligent terminal, as a face target region; and when determining that an error value of a position of a center point of a captured face on the preview screen relative to a position of a center point of the face target region is less than a first preset threshold, and that an error value of an area of the captured face on the preview screen relative to an area of the face target region is less than a second preset threshold, the intelligent device triggers photographing.

In the prior art, whether a face object is within the face target region is determined based on the error value of the position of the center point of the captured face on the preview screen relative to the position of the center point of the face target region and the error value of the area of the captured face on the preview screen relative to the area of the face target region. In this case, the recognized face may not be a target to-be-photographed object, causing low accuracy of recognizing the target to-be-photographed object.
US 2010/066847 A1 discloses that the control section recognizes the registered objects included in the image based on the feature information. Further, the control section executes predetermined processing when two or more of specified objects which are specified among the registered objects are included in the image.
EP 2076022 A2 discloses that upon a detection that a change of the pixel region has occurred, or the pixel region has contacted or exceeded the frame of a predetermined area, a recording processing is started immediately by a high speed consecutive capture.
US2016/127651 A1 discloses that an electronic device obtains a preview of a video captured by the electronic device. The electronic device generates an assistant icon in the preview of the video. The electronic device captures an image of a scene when a desired object enters into the preview of the video and moves to a predetermined position.

### SUMMARY

The present invention is set out in the appended set of appended claims. Embodiments of the present invention provide an image photographing method, to resolve a prior-art problem that recognition accuracy is low when a recognition method based on a position error value and an area error value is used to recognize a target to-be-photographed object.

According to a first aspect, an embodiment of the present invention provides an image photographing method according to claim 1.

According to a second aspect, an embodiment of the present invention provides an image photographing apparatus according to claim 4.

### BRIEF DESCRIPTION OF DRAWINGS

FIG. 1 is a schematic diagram of an information recognition process according to an embodiment of the present invention;
FIG. 2 is a flowchart of an image photographing method according to an embodiment of the present invention;
FIG. 3 is a schematic diagram of a target region determining method according to an embodiment of the present invention;
FIG. 4 is a schematic diagram of another target region determining method according to an embodiment of the present invention;
FIG. 5 is a schematic structural diagram of an image photographing apparatus according to an embodiment of the present invention; and
FIG. 6 is a schematic structural diagram of a preferred implementation of a terminal according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide an image photographing method, to resolve a prior-art problem that recognition accuracy is low when a recognition method based on a position error value and an area error value is used to recognize a target to-be-photographed object. The method and the apparatus are conceived based on a same invention. The method and the apparatus have similar principles for resolving the problem. Therefore, for implementation of the apparatus and the method, reference may be made to each other, and details of repeated parts are not described.

The embodiments of the present invention may be applied to scenarios including but not limited to selfie, framing, photographing of a moving object, and the like.

The solutions provided in the embodiments of the present invention may be applied to a terminal device. The terminal device has a display apparatus such as a display or a projector that can display image information, and has an input apparatus such as a keyboard or a cursor control apparatus such as a mouse or a touchpad. The terminal device further has an image capture device, configured to capture an image or take a photograph. The terminal device may be a desktop computer, a mobile computer, a tablet computer, a smart camera, and the like

To make the embodiments of this application easier to be understood, the following first describes some descriptions in the embodiments of this application. These descriptions should not be considered as a limitation on the protection scope claimed in the present invention.

A preview screen is a screen presented in a display interface of the terminal device after the terminal device starts the image capture device disposed on the terminal device, and the image capture device may be a camera of the terminal device.

Image composition is a process of determining and arranging a position of a photographed target object to generate a more beautiful image. An image composition position is a position of the photographed target object in the image to make the image more beautiful.

Image recognition is a process of recognizing a person or an object based on feature information of the person or the object. In an image recognition technology, a person or an object in an image is recognized on a basis of a main feature of the person or the object. For example, letter A has a sharp corner, P has a circle, and there is an acute angle in a center of Y. In an image recognition process, entered surplus information needs to excluded, to extract key feature information.

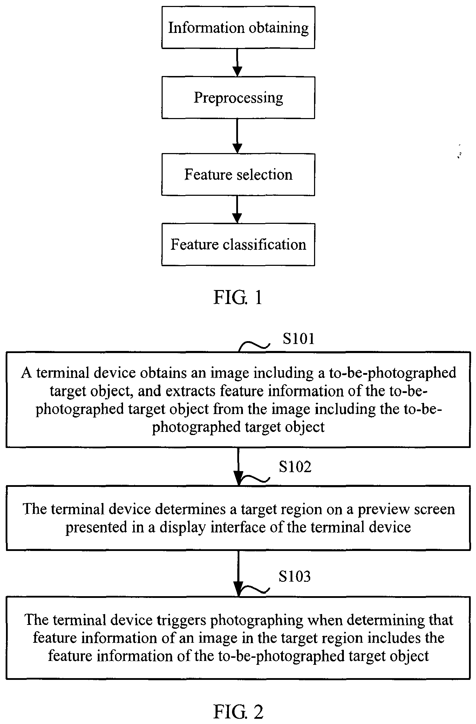

As shown in FIG. 1, an image recognition process is as follows:

First, information is obtained. Specifically, the information may be obtained by a sensor. The obtained information may be a two-dimensional image such as a text and an image, may be a one-dimensional waveform such as an acoustic wave, an electrocardiogram, and an electroencephalogram, or may be a physical quantity and a logical value.

Then, preprocessing is performed. The obtained information may be preprocessed in at least one of the following processing manners:
analog signal\digital signal (English: Analog\Digital, A\D for short) conversion processing, binary processing, image smoothing processing, image enhancement processing, image filtering processing, and the like.

Next, a feature is selected. The feature is selected for the preprocessed information. For example, 4096 pieces of data may be obtained from a 64x64 image, and in a feature extraction and selection process, a feature that can best reflect a classification essence in eigenspace is obtained by converting obtained original data.

Finally, the feature is classified. A classification process may be implemented by using a classifier design or according to a classification policy. A main function of the classifier design is to determine a decision rule through training, so that an error rate is minimized when classification is performed according to such a decision rule. The classification policy is that a recognized object is classified in eigenspace.

The following describes preferred embodiments of the present invention in detail with reference to the accompanying drawings.

FIG. 2 is a flowchart of an image photographing method according to an embodiment of the present invention. The method is performed by an intelligent terminal, and may specifically include the following steps:
S101. A terminal device obtains an image including a to-be-photographed target object, and extracts feature information of the to-be-photographed target object from the image including the to-be-photographed target object.
S102. The terminal device determines a target region on a preview screen presented in a display interface of the terminal device.
S103. The terminal device triggers photographing when determining that feature information of an image in the target region includes the feature information of the to-be-photographed target object.

Specifically, when the feature information of the to-be-photographed target object is extracted from the image including the to-be-photographed target object in step S101, an image recognition technology may be used to extract the feature information of the to-be-photographed target object. The image recognition technology may be statistical pattern recognition, structural pattern recognition, or fuzzy pattern recognition, or may be another recognition algorithm. This is not specifically limited in this embodiment of the present invention.

It should be noted that there is no strict sequence between step S101 and step S102. Step S101 may be first performed, and then step S102 may be performed. Alternatively, step S102 may be first performed, and then step S101 may be performed.

Specifically, before either of step S101 and step S102 is first performed, the terminal device starts an image capture device disposed on the terminal device.

In this embodiment of the present invention, whether the feature information of the image in the target region preset by a user includes the feature information of the target object is determined by extracting the feature information of the target object in a target object feature recognition manner, to determine whether the target object is within the target region. Compared with the prior art in which a recognition method based on a position error value and an area error value is used, the target object feature recognition manner is more effective and has high accuracy in determining whether the target object is within the target region.

Optionally, the terminal device may obtain the image including the to-be-photographed target object in any one of the following manners:

### First implementation:

After the image capture device disposed on the terminal device is started, the terminal device captures the image including the to-be-photographed target object by using the image capture device.

### Second implementation:

The terminal device may obtain the image including the to-be-photographed target object from a database, that stores the image including the to-be-photographed target object, of the terminal device.

It should be noted that the database may be a local database or a cloud database. This is not specifically limited in this embodiment of the present invention.

The terminal device determines that the feature information of the image in the target region includes the feature information of the to-be-photographed target object:

### First implementation:

A1. The terminal device obtains coordinate positions, on the preview screen, of pixels of the to-be-photographed target object on the preview screen.
A2. If determining that the coordinate positions of the pixels of the to-be-photographed target object are all in a coordinate range of the target region, the terminal device determines that the feature information of the image in the target region includes the feature information of the to-be-photographed target object.

The terminal device obtains the coordinate positions, on the preview screen, of the pixels of the to-be-photographed target object on the preview screen in the following manner:

The terminal device obtains an image matching block from an image on the preview screen, and determines a corresponding position of the image matching block on the preview screen as a coordinate position of the to-be-photographed target object. A similarity between feature information of the image matching block and the feature information of the to-be-photographed target object is greater than a preset matching threshold. The preset matching threshold is greater than 0 and less than or equal to 1, and for example, ranges from 90% to 100%. Preferably, a value of the preset matching threshold may be 95%.

It should be noted that the terminal device may obtain the image matching block from the image on the preview screen by using a matching algorithm based on a sum of squares of pixel differences, a least square image matching algorithm, or another matching algorithm. This is not specifically limited in this embodiment of the present invention.

### Second implementation for illustration purposes only:

Bl. The terminal device obtains the feature information of the image in the target region on the preview screen, and matches the feature information of the image in the target region with the feature information of the to-be-photographed target object.
B2. If a value of a similarity between the feature information of the image in the target region and the feature information of the to-be-photographed target object is greater than a preset threshold, the terminal device determines that the feature information of the image in the target region includes the feature information of the to-be-photographed target object.

The preset matching threshold is greater than 0 and less than or equal to 1, and for example, ranges from 90% to 100%. Preferably, a value of the preset matching threshold may be 95%.

It should be noted that the terminal device may compare the preset threshold with the value of the similarity between the feature information of the image in the target region and the feature information of the to-be-photographed target object by using a matching algorithm based on a sum of squares of pixel differences, a least square image matching algorithm, or another matching algorithm. This is not specifically limited in this embodiment of the present invention.

In another possible implementation, the terminal device may determine the target region on the preview screen presented in the display interface of the terminal device in the following manner:

The terminal device receives a region setting instruction that is used to set the target region and that is sent by a user, and sets a region, corresponding to position information carried in the region setting instruction, on the preview screen as the target region. The position information is a coordinate range of at least one adjacent region selected by the user from N regions into which the preview screen is divided, and N is a positive integer greater than or equal to 2.

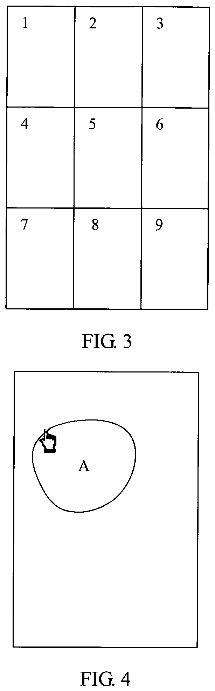

For example, the preview screen is divided into nine regions, as shown in FIG. 3. Specifically, the preview screen presented in the display interface of the terminal device is divided into 9 regions that are sequentially numbered 1 to 9, and the user may select one region or select at least two adjacent regions based on a requirement. For example, when an image with a single person is photographed, two regions numbered 5 and 8 may be selected as the target region; when an image with a plurality of persons is photographed, four regions numbered 5, 6, 8, and 9 may be selected as the target region; when a moving plane is photographed, three regions numbered 7, 8, and 9 may be selected as the target region.

Optionally, the position information may further be a coordinate range of a closed region obtained through sliding by a user by using a finger on the preview screen presented in the display interface of the intelligent terminal. For example, FIG. 4 is a schematic diagram of another target region determining method according to an embodiment of the present invention. The user slides by using a finger on the preview screen presented in the display interface of the intelligent terminal, to obtain a closed region A, and sets the closed region A as the target region.

Optionally, the target region may be determined in the following manner on the preview screen presented in the display interface of the terminal device:

The terminal device receives a selection instruction of a user for selecting the target region, and sets a region, corresponding to region position information carried in the selection instruction, as the target region. The region position information is position information of M preferred image composition position regions pre-stored by the intelligent terminal.

In this embodiment of the present invention, whether the feature information of the image in the target region preset by the user includes the feature information of the target object is determined by extracting the feature information of the target object in the target object feature recognition manner, to determine whether the target object is within the target region. Compared with the prior art in which a recognition method based on a position error value and an area error value is used, the target object feature recognition manner is more effective and has high accuracy in determining whether the target object is within the target region.

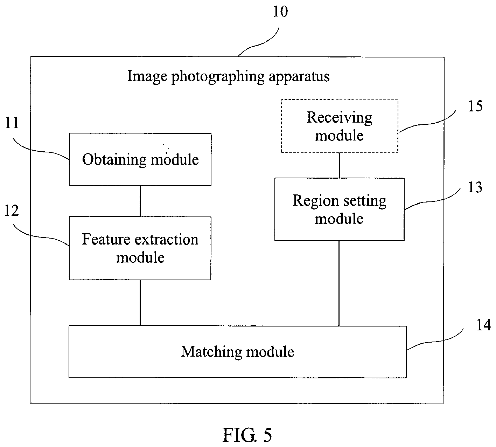

Based on an inventive concept the same as that of the method embodiment corresponding to FIG. 2, an embodiment of the present invention provides an image photographing apparatus 10. The image photographing apparatus 10 is applied to a terminal device. A schematic structural diagram of the apparatus is shown in FIG. 5, including an obtaining module 11, a feature extraction module 12, a region setting module 13, and a matching module 14.

The obtaining module 11 is configured to obtain an image including a to-be-photographed target object.

The feature extraction module 12 is configured to extract feature information of the to-be-photographed target object from the image that is obtained by the obtaining module and that includes the to-be-photographed target object.

The region setting module 13 is configured to determine a target region on a preview screen presented in a display interface of the terminal device.

The matching module 14 is configured to: determine that feature information of an image in the target region set by the region setting module includes the feature information of the to-be-photographed target object extracted by the feature extraction module, and trigger photographing.

Optionally, the obtaining module is specifically configured to:
after an image capture device disposed on the terminal device is started, capture the image including the to-be-photographed target object by using the image capture device.

The matching module is specifically configured to:
obtain coordinate positions, on the preview screen, of pixels of the to-be-photographed target object on the preview screen; and
if determining that the coordinate positions of the pixels of the to-be-photographed target object are all in a coordinate range of the target region set by the region setting module, determine that the feature information of the image in the target region includes the feature information of the to-be-photographed target object extracted by the feature extraction module.

Optionally, the matching module is specifically configured to:
obtain the feature information of the image in the target region set by the region setting module on the preview screen, and match the feature information of the image in the target region with the feature information of the to-be-photographed target object extracted by the feature extraction module; and
if a value of a similarity between the feature information of the image in the target region and the feature information of the to-be-photographed target object is greater than a preset threshold, determine that the feature information of the image in the target region includes the feature information of the to-be-photographed target object.

Optionally, the apparatus may further include:
a receiving module 15, configured to receive a region setting instruction that is used to set the target region and that is sent by a user.

The region setting module is specifically configured to set a region, corresponding to position information carried in the region setting instruction that is received by the receiving module, on the preview screen as the target region. The position information is a coordinate range of at least one adjacent region selected by the user from N regions into which the preview screen is divided, and N is a positive integer greater than or equal to 2.

In this embodiment of this application, the module division is an example and is merely logical function division. During actual implementation, there may be other division manners. In addition, function modules in this embodiment of this application may be integrated into one processor, or each of the function modules may exist alone physically, or at least two modules may be integrated into one module. The integrated module may be implemented in a form of hardware, or may be implemented in a form of a function module of software.

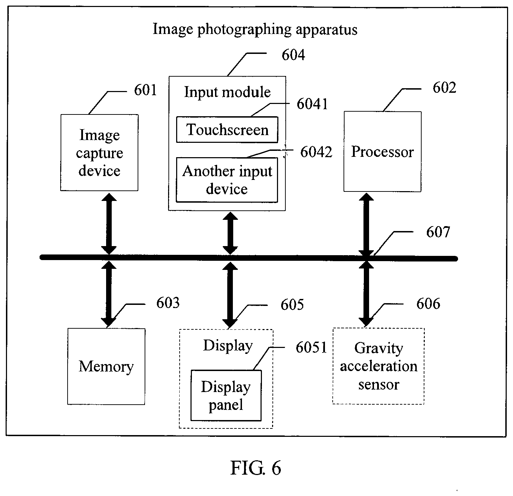

As shown in FIG. 6, when being implemented in the form of hardware, the integrated module may include an image capture device 601, a processor 602, and a memory 603. The integrated module may further include an input module 604, a display 605, and a gravity acceleration sensor 606. Physical hardware corresponding to the obtaining module 11, the feature extraction module 12, the region setting module 13, the matching module 14, and the receiving module 15 may be the processor 602. The processor 602 may capture an image or take a photograph by using the image capture device 601.

The processor 602 is configured to execute program code stored in the memory 603, and is specifically configured to perform the method described in the embodiments corresponding to FIG. 2 and FIG. 3. The processor 602 may be a central processing unit (English: central processing unit; CPU for short), a digital processing unit, or the like.

The memory 603 is configured to store a program executed by the processor 602. The memory 603 may be a volatile memory (English: volatile memory) such as a random-access memory (English: random-access memory, RAM for short). Alternatively, the memory 603 may be a non-volatile memory (English: non-volatile memory) such as a read-only memory (English: read-only memory, ROM for short), a flash memory (English: flash memory), a hard disk (English: hard disk drive, HDD for short), or a solid-state drive (English: solid-state drive, SSD for short). Alternatively, the memory 603 is, but not limited to, any other medium that can be used to carry or store expected program code in a form of an instruction or a data structure and can be accessed by a computer. The memory 603 may be a combination of the foregoing memories.

The image capture device 601 may be a camera, and configured to capture an image, so that the processor 602 obtains the image captured by the image capture device 601.

The input module 604 may be configured to: receive entered digit or character information, and generate key signal input related to user setting and function control of the image photographing apparatus. Specifically, the input module 604 may include a touchscreen 6041 and another input device 6042. The touchscreen 6041 may collect a touch operation performed by a user on or near the touchscreen 6041 (for example, an operation performed by the user on the touchscreen 6041 or near the touchscreen 6041 by using a finger, a knuckle, or any appropriate object such as a stylus), and drive a corresponding connection apparatus based on a preset program. The touchscreen 6041 may detect a touch action of the user on the touchscreen 6041, convert the touch action into a touch signal, send the touch signal to the processor 602, and can receive and execute a command sent by the processor 602. The touch signal includes at least coordinate information of a contact. The touchscreen 6041 may provide an input interface and an output interface between the apparatus 10 and the user. In addition, the touchscreen may be implemented in a plurality of types, such as a resistive type, a capacitive type, an infrared ray type, and a surface acoustic wave type. Specifically, the another input device 6042 may include but is not limited to one or more of a physical keyboard, a function key (such as a volume control key or an on/off key), a mouse, and the like. The gravity acceleration sensor 606 may detect an acceleration value in each direction (there are usually three axes). In addition, the gravity acceleration sensor 606 may be further configured to detect a value and a direction of gravity when a terminal is static, and may be used in an application for recognizing a mobile phone posture (such as screen switching between landscape and portrait modes, a related game, or magnetometer posture calibration), a function related to vibration recognize function (such as a pedometer or a knock), and the like. In this embodiment of the present invention, the gravity acceleration sensor 606 is configured to obtain a gravity acceleration value, in a Z-axis direction, of the touch action of the user that touches the touchscreen 6041.

The apparatus 10 may further include a flash and the like that are not shown, and details are not described herein.

A specific connection medium between the image capture device 601, the processor 602, the memory 603, the input module 604, the display 605, and the gravity acceleration sensor 606 is not limited in this embodiment of this application. In this embodiment of this application, the memory 603, the processor 602, the image capture device 601, the input module 604, the display 605, and the gravity acceleration sensor 606 in FIG. 6 are connected by using a bus 607. The bus is represented by a bold line in FIG. 6. A connection manner between other components is merely an example for description and is not limited herein. The bus may be categorized as an address bus, a data bus, a control bus, or the like. For ease of indication, the bus is indicated by using only one bold line in FIG. 6. However, it does not indicate that there is only one bus or only one type of bus.

The processor 602 is a control center of the apparatus 10, and connects components of the entire apparatus by using various interfaces and lines. The processor 602 runs or executes the instruction stored in the memory 603 and invokes the data stored in the memory 603, to perform various functions and data processing of the apparatus 10, so as to perform overall monitoring on the apparatus 10.

Specifically, a start instruction for starting the image capture device 601 may be sent to the processor 602 by using the input module 604, so that the processor 602 starts the image capture device 601. The processor 602 obtains an image including a to-be-photographed target object by using the image capture device 603, and extracts feature information of the to-be-photographed target object from the image including the to-be-photographed target object.

Then, the user may touch the touchscreen 6041 by using a finger to select a region. The region is one region or at least two adjacent regions of N regions into which the preview screen is divided presented on the display covered under the touchscreen 6041. The gravity acceleration sensor 606 senses a touch operation of the user, and converts a signal generated during the touch operation, into a region setting instruction for setting a target region. The processor 602 receives the region setting instruction, and sets a region, corresponding to location information carried in the region setting instruction, on the preview screen as the target region. Then, the processor 602 obtains coordinate positions, on the preview screen, of pixels of the to-be-photographed target object on the preview screen displayed on the display 605; compares the coordinate positions of the pixels of the to-be-photographed target object on the preview screen with a coordinate range of the target region; and if determining that the coordinate positions of the pixels of the to-be-photographed target object are all in the coordinate range of the target region, determines that feature information of an image in the target region includes the feature information of the to-be-photographed target object, triggers photographing, and obtains a photographed image. The photographed image may be stored on a terminal device or may be uploaded to a cloud server. For details, refer to the implementations described in the embodiments corresponding to FIG. 2 and FIG. 3. Details are not described again in this embodiment of the present invention.

The preferred embodiment described herein is only used to illustrate and explain the present invention, but is not intended to limit the present invention. In addition, this embodiment of this application and the function modules in this embodiment may be combined when they do not conflict with each other.

In this embodiment of the present invention, whether the feature information of the image in the target region preset by the user includes the feature information of the target object is determined by extracting the feature information of the target object in a target object feature recognition manner, to determine whether the target object is within the target region. Compared with the prior art in which a recognition method based on a position error value and an area error value is used, the target object feature recognition manner is more effective and has high accuracy in determining whether the target object is within the target region.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

## Claims

1. An image photographing method, comprising:
obtaining, by a terminal device, an image comprising a to-be-photographed target object;
determining, by the terminal device, a target region on a preview screen presented in a display interface of the terminal device; and
**characterized by**
obtaining, by the terminal device, coordinate positions of pixels of the to-be-photographed target object on the preview screen; and
determining, by the terminal device, that feature information of an image in the target region comprises feature information of the to-be-photographed target object, when determining that the coordinate positions of the pixels of the to-be-photographed target object are all in a coordinate range of the target region, and triggering, by the terminal device, photographing;
wherein the obtaining, by the terminal device, coordinate positions of pixels of the to-be-photographed target object on the preview screen comprises: obtaining an image matching block from an image on the preview screen, and determining a corresponding position of the image matching block on the preview screen as a coordinate position of the to-be-photographed target object;
wherein the image matching block from the image on the preview screen is obtained by using a predetermined matching algorithm;
wherein a similarity between feature information of the image matching block and the feature information of the to-be-photographed target object is greater than a preset matching threshold.

2. The method according to claim 1, wherein the obtaining, by a terminal device, an image comprising a to-be-photographed target object comprises:
after an image capture device disposed on the terminal device is started, capturing, by the terminal device, the image comprising the to-be-photographed target object by using the image capture device.

3. The method according to any one of claim 1 or 2, wherein the determining, by the terminal device, a target region on a preview screen presented in a display interface of the terminal device comprises:
receiving, by the terminal device, a region setting instruction that is used to set the target region and that is sent by a user, and setting a region, corresponding to position information carried in the region setting instruction, on the preview screen as the target region, wherein the position information is a coordinate range of one region or at least two adjacent regions selected by the user from N regions into which the preview screen is divided, and N is a positive integer greater than or equal to 2.

4. An image photographing apparatus, wherein the apparatus is applied to a terminal device and comprises:
an obtaining module (11), configured to obtain an image comprising a to-be-photographed target object;
a region setting module (13), configured to determine a target region on a preview screen presented in a display interface of the terminal device; and
**characterized by** further comprising
a matching module (14), configured to obtain coordinate positions of pixels of the to-be-photographed target object on the preview screen, and determine that feature information of an image in the target region comprises feature information of the to-be-photographed target object when determining that the coordinate positions of the pixels of the to-be-photographed target object are all in a coordinate range of the target region, and trigger photographing;
wherein the obtaining module (11) is further configured to obtain an image matching block from an image on the preview screen, and determine a corresponding position of the image matching block on the preview screen as a coordinate position of the to-be-photographed target object;
wherein the image matching block from the image on the preview screen is obtained by using a predetermined matching algorithm;
wherein a similarity between feature information of the image matching block and the feature information of the to-be-photographed target object is greater than a preset matching threshold.

5. The apparatus according to claim 4, wherein the obtaining module is specifically configured to:
after an image capture device disposed on the terminal device is started, capture the image comprising the to-be-photographed target object by using the image capture device.

6. The apparatus according to any one of claim 4 or 5, wherein the apparatus further comprises:
a receiving module (15), configured to receive a region setting instruction that is used to set the target region and that is sent by a user, wherein
the region setting module is specifically configured to set a region, corresponding to position information carried in the region setting instruction that is received by the receiving module, on the preview screen as the target region, wherein the position information is a coordinate range of one region or at least two adjacent regions selected by the user from N regions into which the preview screen is divided, and N is a positive integer greater than or equal to 2.

## Patentansprüche

1. Bildfotografierverfahren, das Folgendes umfasst:
Erhalten, durch ein Endgerät, eines Bilds, das ein zu fotografierendes Zielobjekt umfasst;
Bestimmen, durch das Endgerät, einer Zielregion auf einem Vorschaubildschirm, der in einer Anzeigeschnittstelle des Endgeräts dargestellt wird; und
**gekennzeichnet durch**
Erhalten, durch das Endgerät, von Koordinatenpositionen von Pixeln des zu fotografierenden Zielobjektes auf dem Vorschaubildschirm; und
Bestimmen, durch das Endgerät, dass Merkmalsinformationen eines Bilds in der Zielregion Merkmalsinformationen des zu fotografierenden Zielobjekts umfassen, wenn bestimmt wird, dass die Koordinatenpositionen der Pixel des zu fotografierenden Zielobjekts alle in einem Koordinatenbereich der Zielregion liegen, und Auslösen, durch das Endgerät, des Fotografierens;
wobei das Erhalten, durch das Endgerät, von Koordinatenpositionen von Pixeln des zu fotografierenden Zielobjekts auf dem Vorschaubildschirm Folgendes umfasst: Erhalten eines Bildübereinstimmungsblocks aus einem Bild auf dem Vorschaubildschirm und Bestimmen einer entsprechenden Position des Bildübereinstimmungsblocks auf dem Vorschaubildschirm als eine Koordinatenposition des zu fotografierenden Zielobjektes; wobei der Bildübereinstimmungsblock aus dem Bild auf dem Vorschaubildschirm durch Verwenden eines vorbestimmten Übereinstimmungsalgorithmus erhalten wird;
wobei eine Ähnlichkeit zwischen Merkmalsinformationen des Bildübereinstimmungsblocks und den Merkmalsinformationen des zu fotografierenden Zielobjekts größer als ein voreingestellter Übereinstimmungsschwellenwert ist.

2. Verfahren nach Anspruch 1, wobei das Erhalten, durch ein Endgerät, eines Bilds, das ein zu fotografierendes Zielobjekt umfasst, Folgendes umfasst:
nachdem eine Bilderfassungsvorrichtung, die auf dem Endgerät angeordnet ist, gestartet worden ist, Erfassen, durch das Endgerät, des Bilds, das das zu fotografierende Zielobjekt umfasst, durch Verwenden der Bilderfassungsvorrichtung.

3. Verfahren nach Anspruch 1 oder 2, wobei das Bestimmen, durch das Endgerät, einer Zielregion auf einem Vorschaubildschirm, der in einer Anzeigeschnittstelle des Endgeräts dargestellt wird, Folgendes umfasst:
Empfangen, durch das Endgerät, einer Regionseinstellungsanweisung, die verwendet wird, um die Zielregion einzustellen und die durch einen Benutzer gesendet wird, und Einstellen einer Region, die den Positionsinformationen entspricht, die in der Regionseinstellungsanweisung getragen werden, auf dem Vorschaubildschirm als die Zielregion, wobei die Positionsinformationen ein Koordinatenbereich von einer Region oder von mindestens zwei angrenzenden Regionen sind, die durch den Benutzer aus N Regionen ausgewählt werden, in die der Vorschaubildschirm unterteilt ist, und N eine positive ganze Zahl größer als oder gleich 2 ist.

4. Bildfotografiereinrichtung, wobei die Einrichtung auf einem Endgerät angewendet wird und Folgendes umfasst:
ein Erhaltungsmodul (11), das konfiguriert ist, um ein Bild zu erhalten, das ein zu fotografierendes Zielobjekt umfasst;
ein Regionseinstellungsmodul (13), das konfiguriert ist, um eine Zielregion auf einem Vorschaubildschirm zu bestimmen, der in einer Anzeigeschnittstelle des Endgeräts dargestellt wird; und
**dadurch gekennzeichnet, dass** sie ferner umfasst
ein Übereinstimmungsmodul (14), das konfiguriert ist, um Koordinatenpositionen von Pixeln des zu fotografierenden Zielobjekts auf dem Vorschaubildschirm zu erhalten, und zu bestimmen, dass Merkmalsinformationen eines Bilds in der Zielregion Merkmalsinformationen des zu fotografierenden Zielobjekts umfassen, wenn bestimmt wird, dass die Koordinatenpositionen der Pixel des zu fotografierenden Zielobjekts alle in einem Koordinatenbereich der Zielregion sind, und um das Fotografieren auszulösen;
wobei das Erhaltungsmodul (11) ferner konfiguriert ist, um einen Bildübereinstimmungsblock aus einem Bild auf dem Vorschaubildschirm zu erhalten, und eine entsprechende Position des Bildübereinstimmungsblocks auf dem Vorschaubildschirm als eine Koordinatenposition des zu fotografierenden Zielobjekts zu bestimmen;
wobei der Bildübereinstimmungsblock aus dem Bild auf dem Vorschaubildschirm durch Verwenden eines vorbestimmten Übereinstimmungsalgorithmus erhalten wird;
wobei eine Ähnlichkeit zwischen Merkmalsinformationen des Bildübereinstimmungsblocks und den Merkmalsinformationen des zu fotografierenden Zielobjekts größer als ein voreingestellter Übereinstimmungsschwellenwert ist.

5. Einrichtung nach Anspruch 4, wobei das Erhaltungsmodul speziell für Folgendes konfiguriert ist:
nachdem eine Bilderfassungsvorrichtung, die auf dem Endgerät angeordnet ist, gestartet worden ist, Erfassen des Bilds, das das zu fotografierende Zielobjekt umfasst, durch Verwenden der Bilderfassungsvorrichtung.

6. Einrichtung nach einem der Ansprüche 4 oder 5, wobei die Einrichtung ferner Folgendes umfasst:
ein Empfangsmodul (15), das konfiguriert ist, um eine Regionseinstellungsanweisung zu empfangen, die verwendet wird, um die Zielregion einzustellen und die durch einen Benutzer gesendet wird, wobei
das Regionseinstellungsmodul speziell konfiguriert ist, um eine Region, die Positionsinformationen entspricht, die in der Regionseinstellungsanweisung getragen werden, die durch das Empfangsmodul empfangen wird, auf dem Vorschaubildschirm als die Zielregion einzustellen, wobei die Positionsinformationen ein Koordinatenbereich von einer Region oder von mindestens zwei angrenzenden Regionen sind, die durch den Benutzer aus N Regionen ausgewählt werden, in die der Vorschaubildschirm unterteilt ist, und N eine positive ganze Zahl größer als oder gleich 2 ist.

## Revendications

1. Procédé de photographie d'images, comprenant :
l'obtention, par un dispositif terminal, d'une image comprenant un objet cible à photographier ;
la détermination, par le dispositif terminal, d'une région cible sur un écran de prévisualisation présenté dans une interface d'affichage du dispositif terminal ; et
**caractérisé par**
l'obtention, par le dispositif terminal, de positions de coordonnées de pixels de l'objet cible à photographier sur l'écran de prévisualisation ; et
la détermination, par le dispositif terminal, du fait que des informations de caractéristiques d'une image dans la région cible comprennent des informations de caractéristiques de l'objet cible à photographier, lors de la détermination du fait que les positions de coordonnées des pixels de l'objet cible à photographier sont toutes dans une plage de coordonnées de la région cible, et le déclenchement, par le dispositif terminal, d'une photographie ;
l'obtention, par le dispositif terminal, de positions de coordonnées de pixels de l'objet cible à photographier sur l'écran de prévisualisation comprenant : l'obtention d'un bloc de correspondance d'images à partir d'une image sur l'écran de prévisualisation, et la détermination d'une position correspondante du bloc de correspondance d'images sur l'écran de prévisualisation en tant que position de coordonnées de l'objet cible à photographier ;
le bloc de correspondance d'images à partir de l'image sur l'écran de prévisualisation étant obtenu au moyen d'un algorithme de correspondance prédéterminé ;
une similitude entre des informations de caractéristiques du bloc de correspondance d'images et les informations de caractéristiques de l'objet cible à photographier étant supérieure à un seuil de correspondance prédéfini.

2. Procédé selon la revendication 1, l'obtention, par un dispositif terminal, d'une image comprenant un objet cible à photographier comprenant :
après le démarrage d'un dispositif de capture d'images disposé sur le dispositif terminal, la capture, par le dispositif terminal, de l'image comprenant l'objet cible à photographier au moyen du dispositif de capture d'images.

3. Procédé selon l'une quelconque de la revendication 1 ou 2, la détermination, par le dispositif terminal, d'une région cible sur un écran de prévisualisation présenté dans une interface d'affichage du dispositif terminal comprenant :
la réception, par le dispositif terminal, d'une instruction de réglage de région qui est utilisée pour régler la région cible et qui est envoyée par un utilisateur, et le réglage d'une région, correspondant à des informations de position transportées dans l'instruction de réglage de région, sur l'écran de prévisualisation en tant que région cible, les informations de position étant une plage de coordonnées d'une région ou d'au moins deux régions adjacentes sélectionnées par l'utilisateur parmi N régions en lesquelles l'écran de prévisualisation est divisé, et N étant un entier positif supérieur ou égal à 2.

4. Appareil de photographie d'images, l'appareil étant appliqué sur un dispositif terminal et comprenant :
un module d'obtention (11), configuré pour obtenir une image comprenant un objet cible à photographier ;
un module de réglage de région (13), configuré pour déterminer une région cible sur un écran de prévisualisation présenté dans une interface d'affichage du dispositif terminal ; et
**caractérisé en ce qu'**il comprend en outre
un module de correspondance (14), configuré pour obtenir des positions de coordonnées de pixels de l'objet cible à photographier sur l'écran de prévisualisation, et déterminer que des informations de caractéristiques d'une image dans la région cible comprennent des informations de caractéristiques de l'objet cible à photographier lors de la détermination du fait que les positions de coordonnées des pixels de l'objet cible à photographier sont toutes dans une plage de coordonnées de la région cible, et déclencher une photographie ;
le module d'obtention (11) étant en outre configuré pour obtenir un bloc de correspondance d'images à partir d'une image sur l'écran de prévisualisation, et déterminer une position correspondante du bloc de correspondance d'images sur l'écran de prévisualisation en tant que position de coordonnées de l'objet cible à photographier ;
le bloc de correspondance d'images à partir de l'image sur l'écran de prévisualisation étant obtenu au moyen d'un algorithme de correspondance prédéterminé ;
une similitude entre des informations de caractéristiques du bloc de correspondance d'images et des informations de caractéristiques de l'objet cible à photographier étant supérieure à un seuil de correspondance prédéfini.

5. Appareil selon la revendication 4, le module d'obtention étant spécifiquement configuré pour :
après le démarrage d'un dispositif de capture d'images disposé sur le dispositif terminal, capturer l'image comprenant l'objet cible à photographier au moyen du dispositif de capture d'images.

6. Appareil selon l'une quelconque des revendications 4 ou 5, l'appareil comprenant en outre :
un module de réception (15), configuré pour recevoir une instruction de réglage de région qui est utilisée pour régler la région cible et qui est envoyée par un utilisateur, le module de réglage de région étant spécifiquement configuré pour régler une région, correspondant à des informations de position transportées dans l'instruction de réglage de région qui est reçue par le module de réception, sur l'écran de prévisualisation en tant que région cible, les informations de position étant une plage de coordonnées d'une région ou d'au moins deux régions adjacentes sélectionnées par l'utilisateur parmi N régions en lesquelles l'écran de prévisualisation est divisé, et N étant un entier positif supérieur ou égal à 2.
